(19) Europäisches Patentamt
European Patent Office
Office européen des brevets

(11) Veröffentlichungsnummer: **0 210 495 B1**

# (12) EUROPÄISCHE PATENTSCHRIFT

(45) Veröffentlichungstag der Patentschrift: **23.10.91**

(51) Int. Cl.5: **H01H 47/32, H03K 17/64**

(21) Anmeldenummer: **86109431.6**

(22) Anmeldetag: **10.07.86**

(54) **Freilaufschaltung.**

(30) Priorität: **01.08.85 DE 3527602**

(43) Veröffentlichungstag der Anmeldung:
**04.02.87 Patentblatt 87/06**

(45) Bekanntmachung des Hinweises auf die
Patenterteilung:
**23.10.91 Patentblatt 91/43**

(84) Benannte Vertragsstaaten:
**DE FR GB IT**

(56) Entgegenhaltungen:
**DE-A- 2 425 585**
**DE-A- 2 612 914**
**GB-A- 2 095 065**

**TOUTE L'ELECTRONIQUE no. 392, Oktober
1974, PARIS Seite 73 - 76; J.-C. RENOTTE:
"CARACTERISTIQUES ET APPLICATIONS
DES ECLATEURS"**

(73) Patentinhaber: **AUDI AG**
**Auto-Union-Strasse 1 Postfach 220**
**W-8070 Ingolstadt(DE)**

(72) Erfinder: **Büchl, Josef**
**Rehsteig 12**
**W-8071 Lenting(DE)**

(74) Vertreter: **Le Vrang, Klaus**
**AUDI AG Postfach 220 Patentabteilung I/EQP**
**W-8070 Ingolstadt(DE)**

## Beschreibung

Die Erfindung betrifft eine Freilaufschaltung gemäß dem Oberbegriff des Anspruchs 1.

Eine derartige Schaltung ist Stand der Technik und beispielsweise bekannt aus der DE- A 24 25 585 oder der DE-A 26 12 914. Die dort bekannten Freilaufschaltungen werden gebildet aus einer Spule, der eine Serienschaltung von Diode und Transistor bzw. von Diode und Thyristor parallelgeschaltet ist.

Durch den Einsatz dieser Halbleiter, die ggf. noch hohe Spannungen oder Ströme vertragen müssen, ist die bekannte Freilaufschaltung verhältnismäßig kostenintensiv.

Aus der Zeitschrift "Toute L'electronique, Nr. 392, Oktober 1974, Paris'" "Caractéristiques et applications des éclateurs" ist der Einsatz eines Überspannungsableiters zur Beseitigung von Überspannungsspitzen bei Ein- und Ausschalten von Spulen bekannt, wozu der Überspannungsableiter - Eclateur - zusammen mit einem veränderbaren Widerstand - Varistance - eingesetzt wird.

Aufgabe der Erfindung ist es, eine Freilaufschaltung zu schaffen, die kostengünstig herstellbar ist.

Die Aufgabe wird gelöst durch den Hauptanspruch.

Idee der Erfindung ist es, einen Überspannungsableiter einzusetzen anstelle der Paarung Tranistor/Diode bzw. Thyristor/Diode. Ein Überspannungsableiter ist ein gängiges Bauteil, das serienmäßig beziehbar ist. Es besteht aus zwei voneinander getrennten Elektroden. Überschreitet der Spannungsunterschied zwischen den beiden Elektroden einen vorbestimmten Wert, der von den jeweiligen Eigenschaften des Überspannungsableiters abhängt, sinkt der vorher im Megaohm befindliche Widerstand zwischen den beiden Elektroden schlagartig auf einen Wert, der deutlich unter 1 Ohm, typischerweise sogar unter 0,1 Ohm liegt, ab. Der Verbindungsfunken zwischen den beiden Elektroden, über den der Stromfluß stattfindet, baut sich ab, sobald die anliegende Spannung unter einen zweiten vorgegebenen Wert absinkt oder die Stromstärke unter einen bestimmten Wert fällt.

Ein derartiger Überspannungsableiter ist ein preiswertes Bauteil, das in Parallelschaltung zu einer Spule für eine Freilaufschaltung sorgt. Die Funktionsweise der Schaltung wird weiter unten in Verbindung mit den Figuren im Detail beschrieben.

Auch der aus der Literatur bekannte Einsatz eines Überspannungsableiters zum Verdichten von Überspannungsspitzen legt dem Fachmann nicht nahe, den Überspannungsableiter für den Aufbau einer Freilaufschaltung zu verwenden. Schon aufgrund der Tatsache, daß die Kombination des Überspannungsableiters mit dem veränderbaren Widerstand stets einen Widerstandswert von einigen ohm aufweist, verhindert den Aufbau einer Freilaufschaltung, die im Stand der Technik üblicherweise verwendete Diode zum Aufbau der Freilaufschaltung ist nach wie vor besser geeignet als die Kombination Varistance/Eclateur.

Um ein schnelles und zuverlässiges Abschalten der Freilaufschaltung zu erreichen, so daß der Stromfluß durch die Spule schlagartig beendet wird, ist vorgesehen, daß der die Spannung an die Spule anlegende Schalter als Halbleiterschalter ausgebildet ist, und daß eine Spannung, die über diesem Schalter anliegt, diesen Halbleiterschalter durchschaltet. Das Durchschalten des Halbleiterschalters geschieht immer dann, wenn die Spannung einen vorgebbaren Wert überschreitet, der kleiner ist als die Durchbruchspannung des Überspannungsableiters. Dadurch kann der Uberspannungsableiter nicht zünden und somit die Parallelschaltung aus Spule und Überspannungsableiter nicht in den Freilaufzustand übergehen.

In bevorzugter Ausführungsform ist der Halbleiterschalter ein Transistor, zwischen dessen plusseitigem Anschluß der Kollektor-Emitter-Strecke und dem Basisanschluß ein schließbarer Schalter vorgesehen ist. Eine in diese wahlweise öffenbare Verbindung eingesetzte Zener-Diode schaltet den Transistor stets dann durch, wenn die über die Zener-Diode anliegende Spannung einen bestimmten Wert erreicht, der kleiner ist als die Durchbruchspannung des Überspannungsableiters. Damit wird erreicht, daß der Freilauf nicht aktiviert wird, so daß kein Freilaufstrom durch die Spule fließt.

Im folgenden wird die Erfindung anhand der Zeichnung näher erläutert. Es zeigen:

Fig. 1     den Aufbau der erfindungsgemäßen Schaltung; und

Fig. 2     Spannungs- und Stromkurven zur Erläuterung der Funktion der Schaltung nach Fig. 1.

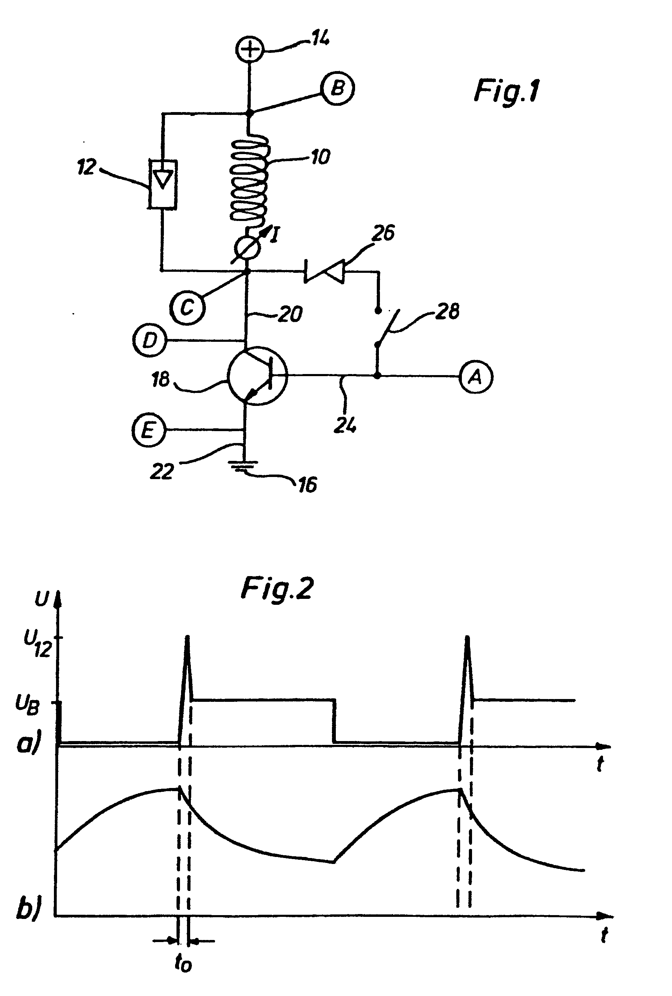

In Fig. 1 ist eine Spule 10 dargestellt, der ein Überspannungableiter 12 parallelgeschaltet ist. Die Spule ist plusseitig an eine positive Spannung 14 mit ihrem Ende B und andererseits mit ihrem Ende C an einen Masseanschluß 16 angeschlossen. Der Masseanschluß C der Spule 10 ist nicht direkt auf Masse 16 gelegt, sondern über den Kollektor 20 und den Emitter 22 eines Transistors 18. Vom Kollektoranschluß 20 führt eine Verbindung zum Basisanschluß 24 des Transistors 18, wobei die Verbindung eine Zener-Diode 26 aufweist, deren Kathode mit dem Kollektor 20 verbunden ist und deren Anode an die Basis 24 führt. Weiterhin ist in dieser Verbindung in Serie zu der Zener-Diode 26 ein Schalter 28 dargestellt, der hier schematisch als mechanischer Schalter angedeutet ist, der jedoch bevorzugterweise ein Halbleiterschalter, beispielsweise ein Transistor sein kann. Über den Anschluß A ist ein Signal an die Basis 24 des Transistors 18 anlegbar.

In Serie zur Spule 10 ist ein Meßgerät I vorgesehen, das andeuten soll, an welcher Stelle die in Fig. 2 dargestellten Stromwerte abgreifbar sind.

Die Funktion der Schaltung, wie auch durch die Kurven in Fig. 2 dargestellt, ist folgende:

Es wird angenommen, daß die Schaltung nach Fig. 1 vom Plus-Pol 14 mit Spannung $U_B$ versorgt wird, die Darstellung in Fig. 2 zeigt die über der Kollektor-Emitter-Strecke des Transistors 18 anliegende Spannung, also die Spannung über den Punkten D und E.

Ist der Transistor durchgeschaltet, fließt, wie in Fig. 2b gezeigt ist, ein Strom durch die Spule 10, aufgrund des Stromdurchflusses vom Pol 14 zum Pol 16.

Wird der Stromdurchfluß durch die Spule 10 unterbrochen, indem der Transistor 18 in seinen Sperrzustand übergeht, baut sich durch die Selbstinduktion eine hohe Spannungsspitze auf, so daß zwischen B und C eine hohe Spannung auftritt. Diese hohe Spannung führt dazu, daß der Überspannungsableiter 12 seine Durchschaltspannung erreicht und Strom von dem Anschluß C der Spule zum Anschluß B über den Überspannungsableiter fließt. Damit wird schlagartig die Spannungsspitze abgebaut, und es fließt der Freilaufstrom durch die Spule 10 und den Überspannungsableiter 12.

In der Freilaufphase fließt also der Strom vom Punkt C über den Überspannungsableiter 12 zum Punkt B. Der ohmsche Widerstand des Überspannungsableiters ist dabei vernachlässigt.

Wenn nun, um die Stromversorgung der Spule zu takten, der Transistor 18 durchgeschaltet wird, wird der Punkt C in etwa auf Masse gezogen (unter Vernachlässigung des Spannungsabfalls über den Transistor 18), so daß der Punkt B auf höherem Potential liegt als der Punkt C. Dadurch kann kein Strom mehr in der Richtung von C nach B über den Überspannungsableiter fließen, der Strom durch den Überspannungsableiter fällt auf 0. Da jedoch der Überspannungsableiter während des Null-Durchganges in seinen hochohmigen Zustand übergeht, fließt nach dem Abfall des Stromes auf 0 praktisch kein Strom mehr durch den Überspannungsableiterzweig, so daß der Strom durch die Spule fließt. Damit kommt es wiederum zu einem Stromanstieg in der Spule, und sobald der Transistor 18 wieder in seinen Sperrzustand übergeht, wiederholt sich die oben geschilderte Freilaufphase.

Auf diese Weise läßt sich eine getaktete Stromversorgung der Spule erreichen, die energetisch vorteilhaft ist.

Dabei wird von dem preiswerten Element eines Überspannungsableiters Gebrauch gemacht. Dieser Überspannungsableiter kann dabei in die Spule integriert werden, da er als passives Bauteil nicht extern angesteuert werden muß.

Um das Magnetfeld der Spule 10 schlagartig abzuschalten, wird ein Signal A an die Basis des Transistors 18 gelegt, und gleichzeitig der Schalter 28 geschlossen, der sich während des Taktbetriebes der Spule in geöffnetem Zustand befindet.

Das Signal A ist sehr kurz, und mit Abschalten des Signals A geht der Transistor 18 in seinen Sperrzustand über. Dabei baut sich die Spannungsspitze wie im vorhergehenden Fall auf, so daß, wenn die Spannungsspitze sich bis zum Schwellwert $U_{12}$ aufbauen würde, bei dem der Überspannungsableiter 12 durchschaltet, sich wiederum eine Freilaufphase anschließen würde.

Jetzt aber ist der Schalter 28 geschlossen, so daß die Spannungsspitze über die Zener-Diode, sobald sie eine Spannung $U_Z$ erreicht hat, den Transistor nochmals durchschaltet, so daß diese Spannung, solange sie größer als $U_7$ ist, begrenzt wird. Dieser Vorgang ist innerhalb von Mikrosekunden beendet, und innerhalb dieser Phase fällt der Strom durch die Spule ab. Die abschließende Spannungsspitze, die definiert ist durch die Zener-Spannung, ist deutlich höher als $U_B$, so daß dieses kurzzeitige Durchschalten des Transistors 18 keinen Stromfluß durch die Spule 10 nach sich zieht.

Andererseits wird das Durchschalten des Überspannungsableiters 12 auf diese Weise verhindert, so daß im Effekt mit dem Abschalten des Signals A der Stromdurchfluß durch die Spule 10 beendet ist.

## Patentansprüche

1. Schaltungsanordnung mit einer Spule (10) und einem Transistor als Schalter (18) zum getakteten Anlegen einer Versorgungsspannung ($U_B$) an die Spule (10), welcher ein nichtlinearer Widerstand als Freilaufschaltung parallelgeschaltet ist, dadurch gekennzeichnet, daß der nichtlineare Widerstand ein Funkenüberspannungsableiter (12) ist, dessen Widerstand beim Ansprechen vom Megaohmbereich unter 1 Ohm, typischerweise unter 0,1 Ohm, absinkt.

2. Schaltungsanordnung nach Anspruch 1, dadurch gekennzeichnet, daß der in Serie zu der Parallelschaltung aus Spule (10) und Überspannungsableiter (12) liegende Transistor (18) an seinem plusspannungsseitigen Anschluß (20) der Kollektor-Emitter-Strecke (DE) über eine Zener-Diode (26) und einen in Serie dazu liegenden weiteren Schalter (28) mit seinem Baissanschluß (24) verbunden ist, und daß die Zener-Spannung ($U_Z$) kleiner als die Durchbruchspannung ($U_{12}$) des Überspannungsableiters (12), jedoch größer als die Versorgungsspannung ($U_B$) ist, und der weitere Schalter (28) sich während des Taktbetriebes der Spule in geöffnetem Zustand befindet.

ne.

## Claims

1. A circuit arrangement with a coil (10) and a transistor as a switch for the clock-pulsed application of a supply voltage ($U_B$) to the coil (10), which is connected in parallel to a non-linear resistor as the free-wheel drive mechanism, characterised in that the non-linear resistor is a spark overvoltage diverter (12), the resistance of which falls to below 1 ohm, typically below 0.1 ohm, in response to the megohm range.

2. A circuit arrangement according to Claim 1, characterised in that the transistor (18) in series with the parallel arrangement of the coil (10) and the overvoltage diverter (12) has its positive-voltage terminal at the collector-emitter segment (DE) connected to its base terminal (24) via a Zener diode (26) and an additional switch (28) in series with the latter, and that the Zener voltage ($U_Z$) is less than the breakdown voltage ($U_{12}$) of the overvoltage diverter (12), but greater than the supply voltage ($U_B$), and the additional switch (28) is open during the clock-pulsed operation of the coil.

## Revendications

1. Circuit comportant une bobine (10) et un transistor (18) en tant que commutateur pour l'application rythmée d'une tension d'alimentation ($U_B$) à la bobine (10), aux bornes de laquelle est montée en parallèle une résistance non linéaire en tant que circuit de roue libre, caractérisé en ce que la résistance non linéaire est un éclateur à étincelle (12), dont la résistance en fonctionnement s'abaisse de la plage des mégohms à moins de 1 Ohm, et plus typiquement à moins de 0,1 Ohm.

2. Circuit suivant la revendication 1, caractérisé en ce que le transistor (18) connecté en série au montage en parallèle composé de la bobine (10) et de l'éclateur (12) est relié par sa borne (20) du côté tension positive du trajet collecteur-émetteur (DE), à sa borne de base (24), par l'intermédiaire d'une diode Zener (26) et d'un autre commutateur (28) monté en série avec celle-ci, et en ce que la tension de Zener ($U_Z$) est inférieure à la tension d'éclatement ($U_{12}$) de l'éclateur (12), mais toutefois supérieure à la tension d'alimentation ($U_B$), et en ce que l'autre commutateur (28) est à l'état ouvert pendant le fonctionnement rythmé de la bobi-

Fig.1

Fig.2